# EUROPÄISCHE PATENTANMELDUNG

(11) **EP 4 488 463 A1**
(43) Veröffentlichungstag der Anmeldung: **08.01.2025**
(21) Anmeldenummer: 24185897.6
(22) Anmeldetag: 02.07.2024
(51) Int. Cl.: E04B 1/10, E04B 1/14, E04B 1/80, E04B 2/70

(54) **VERBUNDWANDELEMENT ZUR HERSTELLUNG EINER THERMISCH ISOLIERENDEN GEBÄUDEHÜLLE ODER EINES THERMISCH ISOLIERENDEN AUFBAUS FÜR EIN LAND- ODER WASSERFAHRZEUG**

(30) Priorität: 06.07.2023 DE 102023117869
(71) Anmelder: Wenzel, Karl-Heinz, 76829 Landau (DE)
(72) Erfinder: Gross, Steffen, 67374 Hanhofen (DE)
(74) Vertreter: Kesselhut, Wolf

(57) **Zusammenfassung**

Ein Verbundwandelement (1) zur Herstellung einer thermisch isolierenden Gebäudehülle (100) oder eines thermisch isolierenden Aufbaus für ein Land- oder Wasserfahrzeug, umfassend eine erste plattenförmige Lage (10) eines eigensteifen Mehrschicht-Verbundwerkstoffs, eine auf dieser befestigte Fachwerkstruktur (20) aus Rechteckprofilen (22), mit zwischen diesen geformten Freiräumen (24), sowie eine auf die Rechteckprofile (22) aufgebrachte zweite Lage (30) eines plattenförmigen eigensteifen Werkstoffs, zeichnet sich dadurch aus, dass in den Freiräumen (24) der Fachwerkstruktur (20) Vakuumisolationspaneele (26) aufgenommen sind, die einen mit Unterdruck beaufschlagten Kern aus einem Trägermaterial (26a) mit geringer Wärmeleitfähigkeit, bevorzugt Kieselsäure, besitzen, welches mit einer den Kern luftdicht umschließenden Folie (26b) ummantelt ist.

## Beschreibung

Die Erfindung betrifft ein Verbundwandelement zur Herstellung einer thermisch isolierenden Gebäudehülle oder eines thermisch isolierenden Aufbaus für ein Land- oder Wasserfahrzeug sowie dessen Verwendung gemäß dem Oberbegriff von Anspruch 1 und 10.

Der Gedanke, Wohngebäude mobil auszugestalten und diese beispielsweise von einem Ort zu einem nächsten zu transportieren, um diese dort für eine längere Zeit stationär zu nutzen, besteht bereits seit langem und wird beispielsweise in Form von Wohnwagen oder Wohnmobilen verwirklicht. Aus der EP 3892496 B1 ist ein Gebäudesystem bekannt, bei welchem transportable Wohneinheiten, die aufgrund ihres geringen Gewichts auf öffentlichen Straßen mithilfe von Transportanhängern transportiert werden können, entweder separat auf jeweiligen Stützen oder aber zu mehreren platzsparend übereinander in speziell ausgestalteten Lagergebäuden angeordnet werden. Um die entsprechenden Gebäudehüllen der transportablen Wohneinheiten thermisch zu isolieren, schlägt das Dokument vor, die Wände derselben als verklebte Sandwichstruktur auszuführen, die neben einer äußeren Decklage aus armiertem Kunststoff und einer innenseitigen Decklage aus Holz oder einem armierten Kunststoff eine zentrale Lage aus einem Vakuumisolationsmaterial aufweist.

Obwohl der in dem Dokument beschriebene Wandaufbau bereits eine sehr gute thermische Isolationswirkung besitzt, ist das flächige Verkleben und Verpressen der Konstruktion aufwendig. Ein weiteres Problem der beschriebenen Sandwichstruktur besteht darin, dass diese eine vergleichsweise große Wandstärke besitzt, um den benötigten Wert für den Wärmedurchgangskoeffizienten (U-Wert) zu erhalten, der gemäß der Energiesparverordnung EnEV 2013 bei 0,24W/(m*K) liegt.

Das zuvor genannte Problem ergibt sich ebenfalls für die Aufbauten von Landfahrzeugen oder auch Wasserfahrzeugen, bei denen es ebenfalls wünschenswert ist eine möglichst leichte und dünnwandige Wandstruktur mit einer hohen thermischen Isolationswirkung zu geringen Kosten bereitzustellen.

Demgemäß ist eine Aufgabe der vorliegenden Erfindung, ein Wandelement zu schaffen, welches die Konstruktion von Gebäudehüllen oder Aufbauten für Landfahrzeuge oder auch Seefahrzeuge ermöglicht, die kostengünstig zu fertigen sind und bei einer möglichst geringen Wandstärke ein hohes thermisches Isolationsvermögen besitzen.

Diese Aufgabe wird erfindungsgemäß durch ein Wandelement mit den Merkmalen von Anspruch 1 gelöst.

Eine weitere Aufgabe der vorliegenden Erfindung ist es, eine neuartige Verwendung eines solchen Wandelements vorzuschlagen.

Diese Aufgabe wird erfindungsgemäß durch eine Verwendung mit den Merkmalen von Anspruch 10 gelöst.

Weitere Merkmale der Erfindung sind in den Unteransprüchen beschrieben.

Gemäß der Erfindung umfasst ein Verbundwandelement zur Herstellung einer thermisch isolierenden Gebäudehülle oder eines thermisch isolierenden Aufbaus für ein Land- oder Wasserfahrzeug eine erste plattenförmige Lage aus einem eigensteifen Mehrschicht-Verbundwerkstoff, eine auf dieser bevorzugt ausschließlich durch Klebstoff befestigte Fachwerkstruktur aus Rechteckprofilen, mit zwischen diesen geformten Freiräumen, sowie eine auf die Rechteckprofile aufgebrachte zweite Lage eines plattenförmigen eigensteifen Werkstoffs. Das Verbundwandelement zeichnet sich dadurch aus, dass in den Freiräumen der Fachwerkstruktur Vakuumisolationspaneele aufgenommen sind, die einen mit Unterdruck beaufschlagten Kern aus einem Trägermaterial mit geringer Wärmeleitfähigkeit besitzen, der mit einer gasdichten Folie, insbesondere Kunststofffolie, ummantelt ist, welche den Kern nach außen hin luftdicht ummantelt oder umschließt. Durch Evakuieren des Innenraums der gasdichten Folie wird die im Trägermaterial des Kerns enthaltene Luft weitestgehend aus diesem entfernt, was dazu führt, dass die Wärmeübertragung durch Konvektion auf ein Minimum abgesenkt wird. Als Trägermaterial, welches den Kern eines Vakuumisolationspanels bildet, wird bevorzugt Kieselsäure verwendet, wobei derartige Vakuumisolationspaneele mit vorgegebenen äußeren Abmessungen von beispielsweise 50 cm x 20 cm und einer Dicke von 3 cm als Massenware auf dem Markt erhältlich sind.

Ein Problem bei der Verarbeitung derartiger bekannter Vakuumisolationspaneele besteht darin, dass diese bei der Verarbeitung beispielsweise durch scharfe Gegenstände leicht beschädigt werden können, sodass Luft in den ansonsten evakuierten Innenraum der luftdicht verklebten oder verschweißten gasdichten Folie eindringt und die Wärmeleitfähigkeit des Trägermaterials stark ansteigt, wodurch die thermische Isolationsfähigkeit der beschädigten Vakuumisolationspaneele aufgehoben wird. Ein weiteres Problem bei der Verarbeitung der bekannten Vakuumisolationspaneele besteht darin, dass diese in ihren äußeren Abmessungen vergleichsweise großen Schwankungen unterliegen, was dazu führt, dass daraus gebildete Sandwich-Wandstrukturen mitunter beachtliche Abmessungsschwankungen aufweisen, die beim Verpressen der Vakuumisolationspaneele mit den anderen Lagen einer Sandwich-Wandstruktur ebenfalls zu einer Beschädigung der Vakuumisolationspaneele führen können, wenn diese ein Übermaß aufweisen.

Wie die Anmelderin erkannt hat, kann dem in vorteilhafter Weise dadurch entgegengewirkt werden, dass die Vakuumisolationspaneele mit Spiel in den zugehörigen Freiräumen aufgenommen werden, sodass in Längsrichtung und auch in Querrichtung der Freiräume zwischen den Außenflächen der Vakuumisolationspaneele und den angrenzenden Flächen der Rechteckprofile ein Abstand von mindestens 1 mm bis bevorzugt 2 mm verbleibt. Ebenso wird die Höhe der Rechteckprofile so gewählt, dass die Freiräume auch in Tiefenrichtung der Vakuumisolationspaneele ein hinreichendes Übermaß aufweisen, sodass zwischen den Innenflächen der ersten und zweiten plattenförmigen Lage jeweils ein Abstand von mindestens 1 mm, bevorzugt mindestens 1,5 bis 2 mm verbleibt. Hierdurch wird sichergestellt, dass die Vakuumisolationspaneele bei einem Übermaß in ihren Abmessungen selbst dann nicht mit einem zusätzlichen Druck beaufschlagt werden, wenn die Freiräume der Fachwerkstruktur Sollmaß, oder gar ein geringes Untermaß in ihrer lichten Weite, Breite und Höhe von beispielsweise 0,5 mm besitzen.

Wie die Anmelderin weiterhin gefunden hat, lassen durch eine industrielle Fertigung des Wandelements als endloses Wandelement vergleichsweise geringe Fertigungstoleranzen erzielen. Hierzu wird die erste plattenförmige Lage auf einer ebenen Tischfläche angeordnet, auf die danach die Rechteckprofile der Fachwerkstruktur in den vorgegebenen Abständen kontrolliert aufgeklebt werden. Im Anschluss daran werden die Vakuumisolationspaneele mit dem genannten Spiel in die Freiräume der Fachwerkstruktur eingelegt und bevorzugt auf der Innenfläche der ersten Lage durch mehrere Klebepunkte fixiert. Schließlich wird auf die Oberseiten der Rechteckprofile sowie bevorzugt auch auf die Oberseiten der in den Freiräumen angeordneten Vakuumisolationspaneele abermals Klebstoff aufgebracht, und abschließend die zweite plattenförmige Lage auf die mit Klebstoff bestrichenen Oberseiten der Rechteckprofile aufgelegt. Nach dem Aushärten des Klebstoffs, der bevorzugt ein bekannter selbsthärtender, im ausgehärteten Zustand elastischer Polymer Klebstoff ist, ergibt sich ein eigensteifes Verbundwandelement, das eine im Vergleich zu bekannten Verbundwandelementen mit einer ähnlichen Wandstärke deutlich erhöhte thermische Isolationswirkung besitzt.

Abschließend können aus einem solchen Endloswandelement die auf eine gewünschte Breite abgelängten Wandelemente, welche die Seitenwände, den Boden und bevorzugt auch das Deckenelement einer Gebäudehülle, oder auch eines Fahzeugaufbaus bilden, durch Sägen der Sandwichstruktur in Längsrichtung der Rechteckprofile erhalten werden.

Wie die Anmelderin weiterhin erkannt hat, lassen sich durch die zuvor beschriebene erfindungsgemäße Konstruktionsweise endlose Wandelemente fertigen, die bei einer Wandstärke von lediglich 70 bis 100 mm ein thermisches Isolationsvermögen aufweisen, dass dem eines Passivhauses entspricht. Das erhöhte thermische Isolationsvermögen führt wiederum dazu, dass die Wandstärke der Außenwände auf ca. 50 % der Wandstärke von herkömmlichen Wandelementen reduziert werden kann, welche für die Erstellung von Gebäuden, die den Passivhaus-Standard genügen, eingesetzt werden. Hierdurch ergibt sich bei einer vorgegebenen Außengröße der Gebäudehülle ein entsprechender Gewinn an Innenraum.

Nach einem weiteren der Erfindung zugrunde liegenden Gedanken sind die Vakuumisolationspaneele an einer oder mehreren Stellen mit der ersten Lage des eigensteifen Mehrschicht-Verbundwerkstoffs und/oder der zweiten Lage punktförmig mit einem Klebstoff verklebt, der im ausgehärteten Zustand elastisch ist. Hierdurch ergibt sich der Vorteil, dass selbst bei großen Temperaturdifferenzen zwischen dem Innenraum und der Umgebung kein Verzug der Sandwichkonstruktion auftritt.

Bei der bevorzugten Ausführungsform der Erfindung sind die Rechteckprofile im Querschnitt rechteckige Holzprofile, bevorzugt Holz-Vollprofile, mit denen die erste Lage und bevorzugt auch die zweite Lage ausschließlich durch Klebstoff, insbesondere einen Polymerklebstoff, verbunden sind. Dies bietet neben einer sehr kostengünstigen, schnellen und sauberen Verarbeitung den Vorteil, dass keine zusätzlichen Wärmebrücken durch Verbindungselemente wie beispielsweise Nägel oder Schrauben geschaffen werden, und zudem auch die die Außenseite einer Gebäudehülle bildende erste Lage aus plattenförmigem Mehrschicht-Verbundwerkstoff nicht durch Vertiefungen oder teilweise herausragende Schraubenköpfe verunstaltet, oder gar beschädigt wird.

Bei der bevorzugten Ausführungsform der Erfindung ist die erste Lage aus Mehrschicht-Verbundwerkstoff und bevorzugt auch die zweite Lage aus plattenförmigem Werkstoff mit den Rechteckprofilen flächig verklebt, bevorzugt mit einem zuvor beschriebenen Einkomponenten-Polymerklebstoff. Hierdurch ergibt sich der Vorteil, dass die gesamte Sandwichkonstruktion ausschließlich durch Verkleben erstellt werden kann, da ein und derselbe Polymerklebstoff ebenfalls punktuell auf die Innenflächen des Mehrschicht-Verbundwerkstoffs und oder die Innenflächen der zweiten Lage aufgebracht werden kann, um diese unter Beibehaltung der zuvor beschriebenen Abstände von ca. 1 mm bis 2 mm relativ zueinander zu fixieren. Dabei ergibt sich durch das lediglich punktuelle Verkleben der Vakuumisolationspaneele mit den Innenflächen der ersten und zweiten plattenförmigen Lage mit einem elastischen Polymerklebstoff der weitere Vorteil, dass eine gewisse Durchbiegung der so erzeugten Wandelemente ermöglicht wird, welche beispielsweise aufgrund der thermisch bedingten Längsausdehnung des Mehrschicht-Verbundwerkstoffs der ersten Lage bei hohen Außentemperaturen oder direkter Sonneneinstrahlung entstehen kann, ohne dass es zu Spannungsrissen oder gar einer Beschädigung der Vakuumisolationspaneele kommt, die gegenüber mechanischen Beanspruchungen sehr empfindlich sind.

Weiterhin kann es bei der bevorzugten Ausführungsform der Erfindung vorgesehen sein, dass die erste Lage a) eine außenliegende Decklage aus schlagzähem Kunststoff, insbesondere glasfaserverstärktem Kunststoff, oder aus Metallblech oder einem als Putzträger geeigneten Material, b) eine auf dieser angeordnete Zwischenlage eines geschäumten Kunststoffmaterials, insbesondere extrudiertem Polystyrol oder extrudiertem Polyurethan, sowie c) eine darauf angeordnete innere Decklage aus schlagzähem Kunststoff, insbesondere glasfaserverstärktem Kunststoff, oder auch aus Metallblech, aufweist, welche miteinander zu einem eigensteifen Mehrschicht-Verbundwerkstoff verbunden, insbesondere verpresst sind. Obgleich derartige Mehrschicht-Verbundwerkstoffe mit einer Wandstärke von beispielsweise 70 mm allein die für den Passivhaus-Standard erforderlichen Isolationseigenschaften nicht aufweisen, können diese im Handel kostengünstig als Meterware in einer hohen Fertigungsqualität bezogen werden, wodurch sich die Herstellungskosten für die erfindungsgemäßen Verbundwandelemente in vorteilhafter Weise weiter reduzieren.

Nach einem weiteren der Erfindung zugrunde liegenden Gedanken umfasst die zweite Lage wenigstens eine Gipskarton- oder Gipsfaserplatte und gleichzeitig oder alternativ eine oder mehrere Holz-Platten, welche letztere bevorzugt als OSB-Platte (Oriented Strand Board) ausgeführt sind.

Hierdurch lassen sich die Fertigungskosten weiter reduzieren, und es wird die Möglichkeit eröffnet, den Innenwandbereich eines aus den erfindungsgemäßen Wandelementen aufgebauten Gebäudes oder eines Fahrzeugaufbaus, wie beispielsweise die Hülle eines Wohnwagens, Kühlfahrzeugs oder auch eines Schiffes, den jeweiligen Wünschen entsprechend flexibel zu gestalten.

Ein weiterer Vorteil, der sich durch den Einsatz von Gipskarton- oder Gipsfaserplatten als zweite Lage ergibt, ist darin zu sehen, dass sich diese im Falle einer Beschädigung eines Vakuumisolationspanels vergleichsweise leicht öffnen und wieder verschließen lassen, um das beschädigte Vakuumisolationspanel gegen ein neues zu ersetzen. In einem solchen Falle stellt es einen besonderen Vorteil dar, dass ein defektes Vakuumisolationspaneel mit geringem Aufwand mit Hilfe einer Infrarotwärmebildkamera oder eines Infrarot-Thermometers anhand des Wärmebildes der Innenwandfläche einer Gebäudehülle ausfindig gemacht werden kann.

Nach einem weiteren der Erfindung zugrunde liegenden Gedanken kann zwischen der Innenfläche der zweiten Lage und der der zweiten Lage zugewandten Seite der Vakuumisolationspaneele eine Stützlage aus einem thermisch isolierenden Werkstoff, insbesondere aus geschäumtem Kunststoff, bevorzugt extrudiertem Polystyrol oder extrudiertem Polyurethan angeordnet sein, in welchen Freiräume und/oder Kanäle zur Aufnahme von Versorgungsleitungen und/oder elektrischen Leitungen eingebracht sind. Hierdurch eröffnet sich die Möglichkeit, im Inneren des erfindungsgemäßen thermisch isolierenden Wandelements Versorgungsleitungen und elektrische Leitungen unterzubringen, und zwar auf der dem Innenraum eines aus den erfindungsgemäßen Wandpaneelen aufgebauten Gebäudes oder Aufbaus für ein Land- oder Wasserfahrzeug. Hierbei stellt es einen besonderen Vorteil dar, dass die Zuleitungen durch Entfernen der Gipskarton- oder Gipsfaserplatten auch im Nachhinein sehr gut zugänglich sind und gegebenenfalls nachträglich durch weitere Leitungen ergänzt werden können. Alternativ können die Freiräume und Kanäle mit den darin aufgenommenen Versorgungsleitungen und elektrischen Leitungen auch zwischen der ersten Lage und der dieser zugewandten Seite der Vakuumisolationspaneele angeordnet werden.

Weiterhin umfasst die Erfindung die Verwendung eines zuvor beschriebenen Verbundwandelements als Wand-, Boden-, oder Deckenelement in einer thermisch isolierenden Gebäudehülle oder einem thermisch isolierenden Aufbau eines Land- oder Wasserfahrzeugs, beispielsweise einem Wohnwagen, einem Kühl-Lkw, oder auch einem Motorboot, insbesondere einem Hausboot, mit einem entsprechenden Aufbau.

Die Erfindung wird nachfolgend mit Bezug auf die Zeichnungen anhand bevorzugter Ausführungsformen beschrieben. In den Zeichnungen zeigen:
- Fig. 1: eine schematische räumliche Frontansicht eines Wohngebäudes, welches aus erfindungsgemäßen Verbundwandelementen aufgebaut ist,
- Fig. 2: eine schematische Querschnittsansicht durch einer erste Ausführungsfonn eines erfindungsgemäßen Verbundwandelements, bei welchem die Freiräume in der Fachwerkstruktur ausschließlich mit Vakuumisolationspaneelen ausgefüllt sind, und
- Fig. 3: eine schematische Querschnittsansicht einer weiteren Ausführungsform eines erfindungsgemäßen Verbundwandelements, bei welchem die Zwischenräume der Fachwerkstruktur neben einem Vakuumisolationspaneel zusätzlich mit einer Stützlage aus einem thermisch isolierenden Werkstoff ausgefüllt sind, in welchem Freiräume und Kanäle für Elektroleitungen und Versorgungsleitungen geformt sind.

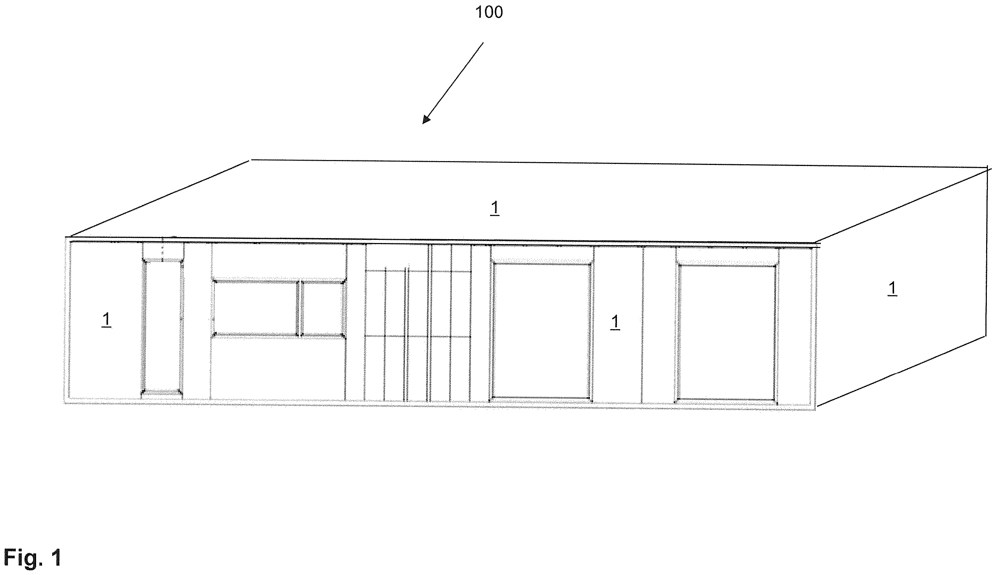

Wie in den Figuren 1 bis 3 gezeigt ist, umfasst ein erfindungsgemäßes Verbundwandelement 1 zur Herstellung einer thermisch isolierenden Gebäudehülle 100 oder eines thermisch isolierenden Aufbaus für ein Land- oder Wasserfahrzeug, eine erste plattenförmige Lage 10 eines eigensteifen Werkstoffs, auf der eine Fachwerkstruktur 20 aus Rechteckprofilen 22 befestigt ist, zwischen denen Freiräume 24 geformt sind. Die Fachwerkstruktur kann dabei in der Weise ausgestaltet sein, dass sich die Freiräume über die gesamte Breite der ersten Lage 10 erstrecken, die bevorzugt als Mehrschicht-Verbundwerkstoffplatte ausgeführt ist, und auf die nachfolgend noch näher eingegangen wird. Alternativ kann die Fachwerkstruktur jedoch auch Freiräume aufweisen, die zu allen Seiten hin durch Querprofile umgrenzt werden, welche jedoch in den Zeichnungen nicht im Detail gezeigt sind.

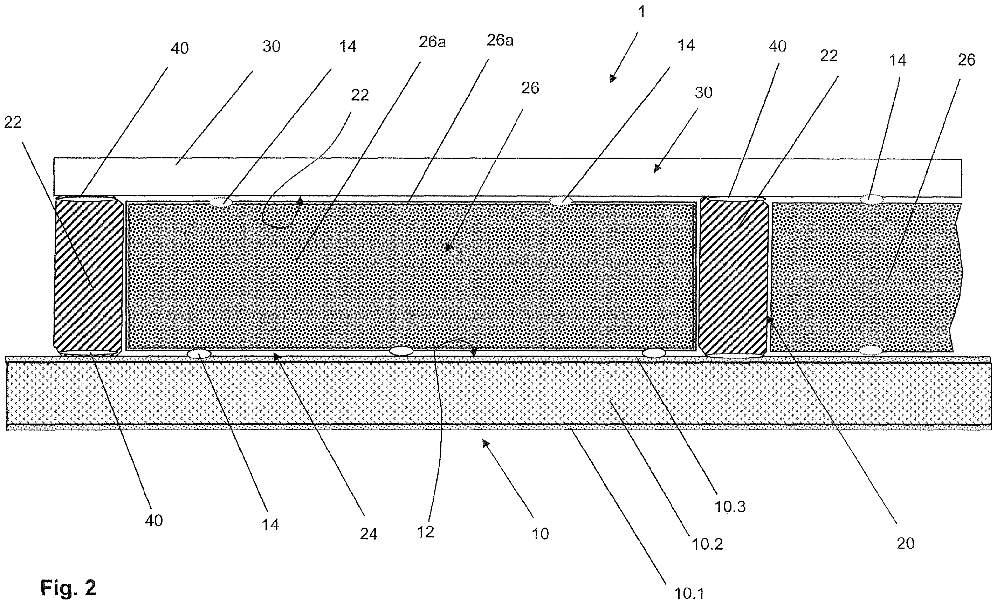

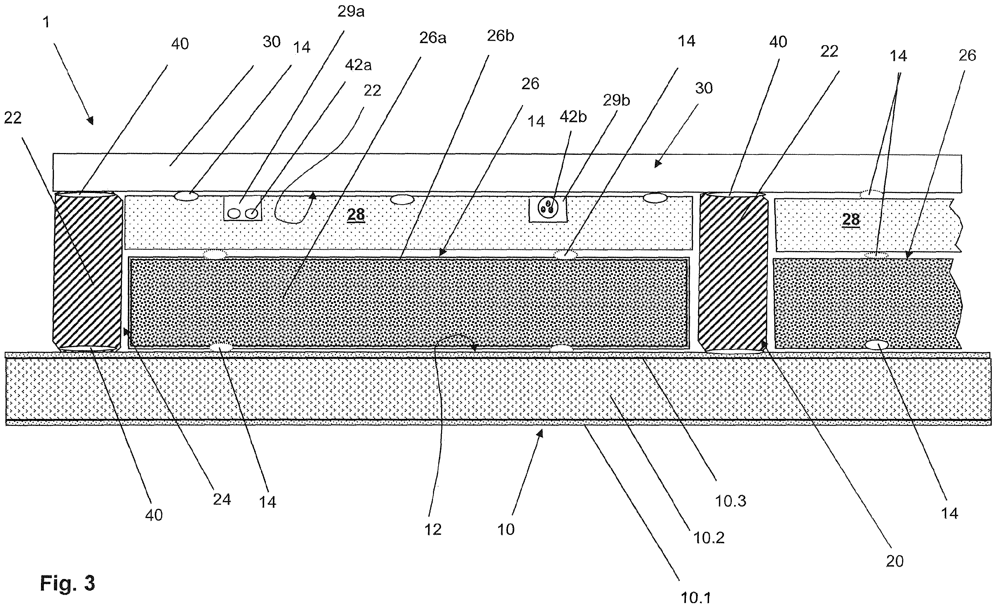

Wie der Darstellung der Figuren 2 und 3 weiterhin entnommen werden kann, ist auf die der ersten Lage 10 gegenüberliegende Seite der Rechteckprofile 22 eine zweite Lage 30 eines plattenförmigen eigensteifen Werkstoffs aufgebracht. In den Freiräumen 24 der Fachwerkstruktur 20 sind Vakuumisolationspaneele 26 aufgenommen, die einen mit Unterdruck beaufschlagen Kern aus einem Trägermaterial 26a mit geringer Wärmeleitfähigkeit, bevorzugt Kieselsäure oder auch Magnesiumoxid oder alternativ Calciumsulfat, besitzen, welches mit einer den Kern luftdicht umschließenden gasdichten Folie 26b ummantelt ist, die in den nicht näher gezeigten überlappenden Bereichen luftdicht verklebt oder thermisch verschweißt ist. In der Folie können weiterhin Drucksensoren angeordnet sein, die von außen her durch die Folie hindurch mittels einer NFC-Ausleseelektronik bestromt und ausgelesen werden können, um einen Druckabfall im Inneren eines Vakuumisolationspaneel 26 durch die erste Lage oder zweite Lage hindurch mittels einer geeigneten Ausleseelektronik erfassen zu können.

Wie den Darstellungen der Figuren 2 und 3 weiterhin entnommen werden kann, sind die Vakuumisolationspaneele 26 mit Spiel in den zugehörigen Freiräumen 24 aufgenommen, so dass in Längsrichtung, Querrichtung sowie auch in Tiefenrichtung der Freiräume 24 zwischen den Außenflächen der Vakuumisolationspaneele 26 und den angrenzenden Flächen der Rechteckprofile 22, bzw. zwischen den Außenflächen der Vakuumisolationspaneele 26 und den angrenzenden Innenflächen der ersten und zweiten Lage 10, 30 jeweils ein Abstand von mindestens 1 mm, bevorzugt mindestens 1,5 bis 2 mm verbleibt.

Um sicherzustellen, dass sich die Vakuumisolationspaneele 26 insbesondere beim Einsatz der erfindungsgemäßen Verbundwandelemente 1 als Wand-, Boden-, oder Deckenelemente in mobilen Gebäuden 100 oder in Fahrzeugaufbauten nicht ungehindert in den Freiräumen 24 bewegen können, sind diese bevorzugt an wenigstens einer Stelle mit der ersten Lage 10 des eigensteifen plattenförmigen Mehrschicht-Verbundwerkstoffs und/oder der zweiten Lage 30 des plattenförmigen eigensteifen Werkstoffs punktförmig durch Klebstoff verbunden, wobei für jedes Vakuumisolationspaneel 26, welches zum Beispiel eine Größe von maximal 1000 x 2000 mm und minimal 400 x 300 mm, bevorzugt 600 x 1000 mm besitzt, beispielsweise 10 bis 50 Klebestellen 14 vorgesehen sein können. Hierdurch wird sichergestellt, dass die Vakuumisolationspaneele 26 durch den bevorzugt elastischen Polymerklebstoff, der z.B. im Baubereich als Montagekleber eingesetzt wird, kraftschlüssig und dennoch elastisch mit der ersten und zweiten Lage 10, 20 verbunden sind.

Wie die Anmelderin erkannt hat, ergibt sich durch diese Konstruktionsweise eine beachtliche Steigerung des Flächenträgheitsmoments des gesamten Verbundwandelements, ohne dass die hohe thermische Isolationsfähigkeit der gesamten Konstruktion verringert wird.

Gemäß der Darstellung der Figuren 2 und 3 sind die Rechteckprofile 22 im Querschnitt rechteckige Holzprofile, die bevorzugt als herkömmliche Holzleisten ausgeführt sind, auf welche die erste plattenförmige Lage 10 aus Mehrschicht-Verbundwerkstoff und bevorzugt auch die zweite Lage 30 aus Gipskarton oder Gipsfaserplatten, bzw. Holzplatten bevorzugt ausschließlich durch Klebstoff 40, insbesondere den erwähnten elastischen Polymerklebstoff, aufgeklebt sind. Um hierbei eine hohe Verdrehsteifigkeit der gesamten Konstruktion zu erhalten, ist die erste Lage 10 und bevorzugt auch die zweite Lage 30 mit den Rechteckprofilen 22 flächig verklebt. Allerdings besteht alternativ die Möglichkeit, dass die zweite Lage 30 aus Gipskarton- oder Gipsfaserplatten mit den Rechteckprofilen 22 durch Schrauben verbunden wird, was den Vorteil mit sich bringen, dass die verschraubten Gipskarton- oder Gipsfaserplatten 30 gewünschten Falls reversibel wieder entfernt werden können, um beispielsweise an im Inneren der Wand geführte Versorgungsleitungen zu gelangen, auf die nachfolgend noch näher eingegangen wird.

Wie aus den Schnittansichten der Figuren 2 und 3 weiterhin erkennbar ist, umfasst die erste plattenförmige Lage 10 eine außenliegende Decklage 10.1 aus schlagzähem Kunststoff, insbesondere glasfaserverstärktem Kunststoff, oder alternativ auch aus Metallblech oder einem als Putzträger geeigneten Werkstoff. Auf diese außenliegende Decklage 10.1 ist eine Zwischenlage 10.2 aus einem geschäumten Kunststoffmaterial, insbesondere extrudiertem Polystyrol oder extrudiertem Polyurethan aufgebracht, auf der wiederum eine innere Decklage 10.3 aus schlagzähem Kunststoff, insbesondere glasfaserverstärktem Kunststoff angeordnet ist. Die drei Lagen 10.1, 10.2 und 10.3 sind bevorzugt in einer Form geschäumt und miteinander zu einem bekannten eigensteifen Mehrschicht-Verbundwerkstoff verbunden, insbesondere verpresst.

Wie bereits zuvor ausgeführt, ist die zweite Lage 30 in vorteilhafter Weise als Gipskarton- oder Gipsfaserplatte ausgeführt, die in üblicher Weise beispielsweise mit einer Tapete beklebt, mit Putz dekoriert oder mit einer Vertäfelung oder einer sonstigen Beschichtung versehen werden kann.

Gemäß der Darstellung von Figur 3 ist zwischen der der ersten Lage 10 zugewandten Seite der Vakuumisolationspaneele 26 und der ersten Lage 10 und/oder zwischen der der zweiten Lage 30 zugewandten Seite der Vakuumisolationspaneele 26 und der zweiten Lage 30 eine Stützlage 28 aus einem thermisch isolierenden Werkstoff aus geschäumtem Kunststoff, bevorzugt extrudiertem Polystyrol oder extrudiertem Polyurethan, angeordnet, in welchen Freiräume 29a und/oder Kanäle 29b zur Aufnahme von Versorgungsleitungen 42a für Wasser und sonstige gasförmige oder flüssige Medien und/oder für elektrische Leitungen 42b eingebracht sind.

### Liste der Bezugszeichen

- 1: Verbundwandelement
- 10: erste plattenförmige Lage aus Mehrschicht-Verbundwerkstoff
- 10.1: außen liegende Decklage aus schlagzähem Kunststoff
- 10.2: Zwischenlage aus geschäumtem Kunststoffmaterial
- 10.3: innere Decklage aus schlagzähem Kunststoff
- 12: Innenfläche der ersten Lage
- 14: Klebestellen
- 20: Fachwerkstruktur
- 22: Rechteckprofile
- 24: Freiräume
- 26: Vakuumisolationspaneele
- 26a: Kern der Vakuumisolationspaneele
- 26b: Folie
- 28: Stützlage aus thermisch isolierendem Werkstoff
- 29a: Freiräume/Kanäle für Versorgungsleitungen
- 29b: Freiräume/Kanäle für elektrische Leitungen
- 30: zweite plattenförmige Lage aus eigensteifem Werkstoff/Gipskarton oder Gipsfaser
- 22: Innenfläche der zweiten Lage
- 40: Klebstoff
- 42a: Versorgungsleitungen
- 42a: elektrische Leitungen
- 100: Gebäudehülle

## Patentansprüche

1. Verbundwandelement (1) zur Herstellung einer thermisch isolierenden Gebäudehülle (100) oder eines thermisch isolierenden Aufbaus für ein Land- oder Wasserfahrzeug, umfassend eine erste plattenförmige Lage (10) eines eigensteifen Mehrschicht-Verbundwerkstoffs, eine auf dieser befestigte Fachwerkstruktur (20) aus Rechteckprofilen (22), mit zwischen diesen geformten Freiräumen (24), sowie eine auf die Rechteckprofile (22) aufgebrachte zweite Lage (30) eines plattenförmigen eigensteifen Werkstoffs,
**dadurch gekennzeichnet, dass**
in den Freiräumen (24) der Fachwerkstruktur (20) Vakuumisolationspaneele (26) aufgenommen sind, die einen mit Unterdruck beaufschlagten Kern aus einem Trägermaterial (26a) mit geringer Wärmeleitfähigkeit, bevorzugt Kieselsäure, besitzen, welches mit einer den Kern luftdicht umschließenden Folie (26b) ummantelt ist.

2. Verbundwandelement nach Anspruch 1,
**dadurch gekennzeichnet, dass**
die Vakuumisolationspaneele (26) mit Spiel in den zugehörigen Freiräumen (24) aufgenommen sind, derart, dass in Längsrichtung und/oder in Querrichtung und/oder in Tiefenrichtung der Freiräume (24) zwischen den Außenflächen der Vakuumisolationspaneele (26) und den angrenzenden Flächen der Rechteckprofile (22) sowie den Außenflächen der Vakuumisolationspaneele (26) und den angrenzenden Innenflächen der ersten und zweiten Lage (10), (30) jeweils ein Abstand von mindestens 1 mm, bevorzugt mindestens 1,5 bis 2 mm verbleibt. Dadurch wird sichergestellt, dass die Vakuumisolationspaneele (26) zu allen Seiten hin lose in die Freiräume (24) der Fachwerkstruktur (20) eingelegt sind und nicht mit einer Druckkraft beaufschlagt werden, die zu einer mechanischen Beschädigung der Paneele führen kann, wenn diese in die Freiräume (24) eingepresst werden.

3. Verbundwandelement nach einem der vorhergehenden Ansprüche,
**dadurch gekennzeichnet, dass**
die Vakuumisolationspaneele (26) in die Freiräume (24) der Fachwerkstruktur (20) lose eingelegt sind.

4. Verbundwandelement nach Anspruch 3,
**dadurch gekennzeichnet, dass**
die Vakuumisolationspaneele (26) an einer oder mehreren Stellen mit der ersten Lage (10) des eigensteifen plattenförmigen Mehrschicht-Verbundwerkstoffs und/oder der zweiten Lage (30) des plattenförmigen eigensteifen Werkstoffs punktförmig verklebt sind.

5. Verbundwandelement nach einem der vorhergehenden Ansprüche,
**dadurch gekennzeichnet, dass**
die Rechteckprofile (22) im Querschnitt rechteckige Holzprofile, bevorzugt Holz-Vollprofile sind, und dass die erste Lage (10) und bevorzugt auch die zweite Lage (30) mit den Rechteckprofilen (22) ausschließlich durch Klebstoff (40), insbesondere Polymerklebstoff, verbunden sind.

6. Verbundwandelement nach Anspruch 5,
**dadurch gekennzeichnet, dass**
die erste Lage (10) und/oder die zweite Lage (30) mit den Rechteckprofilen (22) flächig verklebt ist.

7. Verbundwandelement nach einem der vorhergehenden Ansprüche,
**dadurch gekennzeichnet, dass**
die erste Lage (10)
a) eine außenliegende Decklage (10.1) aus schlagzähem Kunststoff, insbesondere glasfaserverstärktem Kunststoff, oder aus Metallblech oder einem als Putzträger geeigneten Werkstoff,
b) eine auf dieser außenliegenden Decklage (10.1) angeordnete Zwischenlage (102) eines geschäumten Kunststoffmaterials, insbesondere extrudiertem Polystyrol oder extrudiertem Polyurethan, sowie
c) eine darauf angeordnete innere Decklage (10.3) aus schlagzähem Kunststoff, insbesondere glasfaserverstärktem Kunststoff, umfasst, welche miteinander zu einem eigensteifen Mehrschicht-Verbundwerkstoff verbunden sind.

8. Verbundwandelement nach einem der vorhergehenden Ansprüche,
**dadurch gekennzeichnet, dass**
die zweite Lage (30) wenigstens eine Gipskarton- oder Gipsfaserplatte und/oder eine Holz-Platte und/oder eine OSB-Platte (Oriented Strand Board) umfasst.

9. Verbundwandelement nach einem der vorhergehenden Ansprüche,
**dadurch gekennzeichnet, dass**
zwischen der der ersten Lage (10) zugewandten Seite der Vakuumisolationspaneele (26) und der ersten Lage (10) und/oder zwischen der der zweiten Lage (30) zugewandten Seite der Vakuumisolationspaneele (26) und der zweiten Lage (30) eine Stützlage (28) aus einem thermisch isolierenden Werkstoff, insbesondere aus geschäumtem Kunststoff, bevorzugt extrudiertem Polystyrol oder extrudiertem Polyurethan angeordnet ist, in welchen Freiräume (29a) und/oder Kanäle (29b) zur Aufnahme von Versorgungsleitungen (42a) und/oder elektrischen Leitungen (42b), eingebracht sind.

10. Verwendung eines Verbundwandelements (1) nach einem der vorhergehenden Ansprüche als Wand-, Boden-, oder Deckenelement in einer thermisch isolierenden Gebäudehülle (100) oder einem thermisch isolierenden Aufbau eines Land- oder Wasserfahrzeugs.
